# FASCICULE DE BREVET EUROPEEN

(11) **EP 0 748 765 B1**
(45) Date de publication et mention de la délivrance du brevet: **11.08.1999**
(21) Numéro de dépôt: 96401278.5
(22) Date de dépôt: 12.06.1996
(51) Int. Cl.: C01B 31/18, F25J 3/08

(54) **Installation de production de monoxyde de carbone incorporant une unité de séparation cryogénique**
Anlage zur Herstellung von Kohlenmonoxid, welche eine kryogene Trennvorrichtung aufweist
Installation for the production of carbon monoxide including a cryogenic separation plant

(30) Priorité: 15.06.1995 FR 9507160
(43) Date de publication de la demande: 18.12.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Billy, Jean, 94420 Le Plessis Trevise (FR)
(74) Mandataire: Sueur, Thierry

(56) Documents cités:
- DE-A- 2 739 955

## Description

La présente invention concerne les installations de production de monoxyde de carbone, du type comprenant une unité de séparation cryogénique alimentée en mélange gazeux contenant du monoxyde de carbone par une ligne d'alimentation incorporant une unité d'épuration d'impuretés par adsorption comprenant au moins deux adsorbeurs.

Le monoxyde de carbone pur est utilisé dans un certain nombre de procédés de l'industrie chimique et est le plus souvent généré à partir d'hydrocarbures par reformage à la vapeur ou oxydation partielle, se retrouvant ainsi en mélange avec de l'hydrogène et du méthane dont il est séparé dans une unité de séparation cryogénique. Les procédés de séparation cryogénique imposent que le mélange gazeux à séparer soit exempt de toutes traces de composants solidifiables, essentiellement de l'eau et du dioxyde de carbone, une telle épuration étant assurée par une unité d'épuration par adsorption comprenant des adsorbeurs contenant au moins un matériau adsorbant solide tel que l'alumine, un gel de silice ou un tamis moléculaire. Ces adsorbants ont, à des degrés divers, une certaine affinité à retenir également le monoxyde de carbone. De ce fait, le fonctionnement cyclique d'une unité d'épuration par adsorption a pour conséquences une variation également cyclique du débit de la production de monoxyde de carbone en sortie de l'unité de séparation cryogénique. Le poste utilisateur aval, typiquement un réacteur chimique, ne tolère en général pas de telles variations, d'où il résulte que le contrôle de la chaîne de monoxyde de carbone se fait généralement avec dérivation et combustion d'une partie de la production du monoxyde de carbone pour lisser le débit de production, avec les inconvénients afférents de pertes de production et de retraitement des rejets.

La présente invention a pour objet de proposer une installation permettant de façon simple, efficace et peu onéreuse, de réguler la production de monoxyde de carbone dans une telle installation, en limitant grandement les pertes de production.

Pour ce faire, selon une caractéristique de l'invention, l'installation comporte, interposé à demeure dans la ligne d'alimentation, entre l'unité d'épuration et l'unité de séparation cryogénique, un réservoir contenant un matériau adsorbant présentant une affinité pour le monoxyde de carbone.

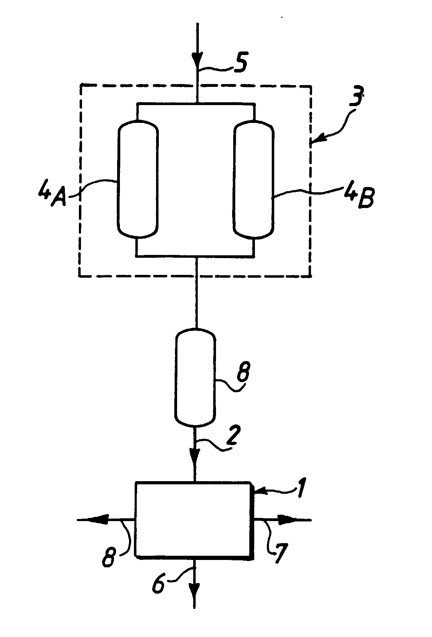

D'autres caractéristiques et avantages de la présente invention ressortiront de la description suivante d'un mode de réalisation donné à titre illustratif mais nullement limitatif, faite en relation avec le dessin annexé, sur lequel la figure unique représente de façon schématique une installation selon l'invention.

Sur cette figure, on a représenté schématiquement une unité de séparation cryogénique 1 alimentée en mélange gazeux à séparer par une ligne 2 reliée à la sortie de production d'une unité d'épuration 3 comprenant au moins deux adsorbeurs 4A, 4B mis en service en alternance pour épurer en impuretés solidifiables un mélange gazeux d'entrée 5 contenant du monoxyde de carbone. L'unité de séparation cryogénique 1 comprend une ligne 6 de fourniture de monoxyde de carbone pur et des lignes 7 et 8 de sortie d'hydrogène et de mélange gazeux résiduaire, respectivement.

Selon l'invention, dans la ligne 2 est interposé en permanence un réservoir 8, de dimensions analogues à celles des adsorbeurs 4A, 4B, rempli d'un matériau adsorbant, avantageusement le même adsorbant que l'adsorbant majoritaire des adsorbeurs 4A, 4B, typiquement un tamis moléculaire.

Le fonctionnement de l'installation selon l'invention peut être résumé comme suit :

En phase de fonctionnement continu, les adsorbants de l'adsorbeur 4A, 4B en service et du réservoir 8 sont saturés en monoxyde de carbone et sont donc "transparents" vis-à-vis de ce dernier. Lors de l'inversion des adsorbeurs 4A, 4B, au début de la mise en service de l'adsorbeur nouvellement régénéré, celui-ci se sature en monoxyde de carbone alors que l'adsorbant du réservoir 8 se décharge d'une partie du monoxyde de carbone qu'il retenait. Lorsque l'adsorbeur nouvellement mis en service arrive à saturation en monoxyde de carbone, inversement, l'adsorbant du réservoir 8 se resature en monoxyde de carbone, ce qui fait que, comme annoncé, les variations cycliques du débit de la production du monoxyde de carbone sont quasiment lissées.

## Revendications

1. Installation de production de monoxyde de carbone, comprenant une unité de séparation cryogénique (1) alimentée en mélange gazeux contenant du monoxyde de carbone par une ligne d'alimentation (5, 2) incorporant une unité (3) d'épuration d'impuretés par adsorption comprenant au moins deux adsorbeurs (4A, 4B) et un réservoir (8) contenant un matériau adsorbant présentant une affinité pour le monoxyde de carbone interposé à demeure dans la ligne d'alimentation (2) entre l'unité de épuration (3) et l'unité de séparation (1).

2. Installation selon la revendication 1, caractérisée en ce que l'adsorbant du réservoir (8) est le même que celui des adsorbeurs (4A, 4B).

3. Installation selon la revendication 2, caractérisée en ce que l'adsorbant est un tamis moléculaire.

## Patentansprüche

1. Vorrichtung zur Herstellung von Kohlenmonoxid, bestehend aus einer Tieftemperaturtrennanlage (1), der über eine Zufuhrleitung (5, 2) mit einer eingebauten, aus mindestens zwei Adsorbern (4A, 4B) bestehenden Anlage (3) zur Entfernung von Verunreinigungen durch Adsorption ein Kohlenmonoxid enthaltendes Gasgemisch zugeführt wird, und einem einen adsorbierenden Stoff mit einer Affinität für Kohlenmonoxid enthaltenden Behälter (8), der in der Zufuhrleitung (2) zwischen der Reinigungsanlage (3) und der Trennanlage (1) fest eingebaut ist.

2. Vorrichtung nach Anspruch 1, dadurch gekennzeichnet, daß das Adsorptionsmittel des Behälters (8) dasselbe wie dasjenige der Adsorber (4A, 4B) ist.

3. Vorrichtung nach Anspruch 2, dadurch gekennzeichnet, daß das Adsorptionsmittel ein Molekularsieb ist.

## Claims

1. Carbon monoxide production plant, comprising a cryogenic separation unit (1) supplied with a gas mixture containing carbon monoxide via a feed line (5, 2) incorporating a purification unit (3) which adsorbs impurities and comprises at least two adsorbers (4A, 4B) and a tank (8) containing an adsorbent which has an affinity for carbon monoxide, this tank being permanently interposed in the feed line (2) between the purification unit (3) and the separation unit (1).

2. Plant according to Claim 1, characterized in that the adsorbent in the tank (8) is the same as the one in the adsorbers (4A, 4B).

3. Plant according to Claim 2, characterized in that the adsorbent is a molecular sieve.
